# EUROPEAN PATENT SPECIFICATION

(11) **EP 3 552 736 B1**
(45) Date of publication and mention of the grant of the patent: **03.03.2021**
(21) Application number: 19161375.1
(22) Date of filing: 07.03.2019
(51) Int. Cl.: B22F 3/00, B22F 3/03, B22F 3/16, C22C 1/05, C22C 33/02, C22C 38/00, H01F 1/059, H01F 1/08, H01F 41/02

(54) **PRODUCTION METHOD OF RARE EARTH MAGNET**
HERSTELLUNGSVERFAHREN FÜR SELTENERDMAGNET
PROCÉDÉ DE PRODUCTION D'AIMANT À BASE DE TERRES RARES

(30) Priority: 09.04.2018 JP 2018074859
(43) Date of publication of application: 16.10.2019
(73) Proprietor: TOYOTA JIDOSHA KABUSHIKI KAISHA, Toyota-shi, Aichi-ken 471 8571 (JP)
(72) Inventor: SAKUMA, Noritsugu, Aichi-ken, 471-8571 (JP); HAGA, Kazuaki, Aichi-ken, 471-8571 (JP)
(74) Representative: J A Kemp LLP

(56) References cited:
- JP-A- H04 338 605
- JP-A- S59 103 309
- US-A- 6 007 757
- US-A1- 2016 104 572
- YOSHICHIKA OTANI ET AL: "METAL BONDED SM2FE17N3-A MAGNETS", JOURNAL OF APPLIED PHYSICS, AMERICAN INSTITUTE OF PHYSICS, US, vol. 69, no. 9, 1 May 1991 (1991-05-01), pages 6735-6737, XP000235591, ISSN: 0021-8979, DOI: 10.1063/1.348900

## Description

### [TECHNICAL FIELD]

The present disclosure relates to a production method of a rare earth magnet, particularly, a rare earth magnet containing Sm, Fe and N.

### [BACKGROUND ART]

As a high-performance rare earth magnet, a Sm-Co-based rare earth magnet and a Nd-Fe-B-based rare earth magnet are put into practical use, but in recent years, a rare earth magnet other than these is being studied.

For example, a rare earth magnet containing Sm, Fe and N (hereinafter, sometimes referred to as "Sm-Fe-N-based rare earth magnet") has been studied. In the Sm-Fe-N-based rare earth magnet, N is considered to form an interstitial solid solution in a Sm-Fe crystal. The Sm-Fe-N-based rare earth magnet is known as a rare earth magnet having a high Curie temperature and excellent magnetic properties at high temperatures (from 150 to 300°C).

Improvements of the Sm-Fe-N-based rare earth magnet are also being studied. For example, Patent Document 1 discloses an attempt to enhance the coercive force by mixing a magnetic powder containing Sm, Fe and N with a metallic Zn powder, molding the mixture, and heat-treating the molded body.

### [CITATION LIST]

### [PATENT LITERATURE]

[Patent Literature 1] Japanese Unexamined Patent Publication No. 2015-201628

### [SUMMARY OF THE INVENTION]

### [TECHNICAL PROBLEM]

The rare earth magnet disclosed in Patent Document 1 (hereinafter, sometimes referred to as "rare earth magnet of Patent Document 1") uses a magnetic powder produced by a cold spray process. In the rare earth magnet of Patent Document 1, the magnetic properties, particularly, the coercive force, may not be sufficient. This is considered to be attributable to the production method. From this, the present inventors have found a problem that as to the Sm-FeN-based rare earth magnet, a production method capable of enhancing the magnetic properties, particularly, the coercive force, is demanded.

JP H04 338605 discloses magnetic powder which is constituted of magnetic particles which contains 5-15 atom% R, 0.5-25 atom% N and T for the rest. But, R is one or more kinds of elements selected from rear earth elements and contains Sm as essential elements. Moreover, T is Fe, or Fe and Co. And fluid, wherein magnetic particles are dispersed in binders in the shape of molten metal, is molded by casting, being kept at 550 deg.C or less. And after casting, heat treatment is applied to diffuse elements constituting magnetic particles and elements constituting binders with each other. Hereby, the degree of freedom in shape improves, and high coercive force can be achieved.

Yoshichika Otani et al: "Metal Bonded SM2FE17N3-A Magnets", Journal of Applied Physics, American Institute of Physics, US, vol. 69, no. 9, 1 May 1991 (1991-05-01), pages 6735-6737, discloses metal bonded Sm₂ Fe₁₇ N_{3-δ} magnets.

JP S59 103309 discloses a mold composed of a lower die, punch and a peripheral die which is situated within a gap between a pair of solenoids each having a solenoid coil and a pole piece. The die is made of a non-magnetic stellite, while the punches are made of normalized SuJ₂.

US 6,007,757 discloses a method of producing an anisotropic bonded magnet.

US 2016/0104572 discloses a method for manufacturing a rare-earth magnet capable of preventing the lubricant from flowing down during hot deformation processing, whereby friction force can be made as uniform as possible at the overall region of the sintered body, and so the rare-earth magnet manufactured can have less distribution of magnetic performance.

The present disclosure has been made to solve the above-described problem and aims at providing a production method capable of enhancing the magnetic properties, particularly, the coercive force, of an Sm-Fe-N-based rare earth magnet and a production apparatus used therefor.

### [SOLUTION TO PROBLEM]

The present inventors have continued intensive studies to attain the object above and have accomplished the production method of a rare earth magnet of the present disclosure and the production apparatus used therefor.

The present invention is defined by the claims.

### [ADVANTAGEOUS EFFECTS OF INVENTION]

According to the present disclosure, a sintering pressure is imposed in the state of at least a part of the modifier powder in the mixed powder being melted, and the melted product functions as a lubricant and/or a buffer, so that a stress loaded on a particle of the magnetic raw material powder in the mixed powder can be reduced at the time of liquid phase sintering. As a result, a production method capable of enhancing the magnetic properties of a Sm-Fe-N-based rare earth magnet, particularly, the coercive force, by preventing the magnetic properties of the magnetic raw material powder from deteriorating due to the load of stress, and a production apparatus used therefor can be provided.

### [BRIEF DESCRIPTION OF DRAWINGS]

[Fig. 1] Fig. 1 is a schematic diagram illustrating a production apparatus of the present disclosure.
[Fig. 2] Fig. 2 is an explanatory diagram illustrating heating and pressurizing patterns when samples of Examples 1 and 2 were prepared.
[Fig. 3] Fig. 3 is an explanatory diagram illustrating heating and pressurizing patterns when samples of Comparative Examples 1 and 2 were prepared.
[Fig. 4] Fig. 4 is a graph illustrating the results when samples of Examples 1 and 2 and Comparative Examples 1 and 2 were measured for the coercive force.
[Fig. 5] Fig. 5 is a graph illustrating the relationship between the main die temperature T and the coercive force with respect to samples of Examples 3 to 7 and Comparative Examples 3 to 9.
[Fig. 6] Fig. 6 is a graph illustrating the relationship between the main die temperature T and the coercive force with respect to samples of Examples 3 to 12 and Comparative Examples 3 to 4.
[Fig. 7] Fig. 7 is a graph illustrating the relationship between the main die temperature T and the coercive force with respect to samples of Examples 13 to 35 and Comparative Examples 10 to 19.

### [DESCRIPTION OF EMBODIMENTS]

Embodiments of the production method of a rare earth magnet according to the present disclosure is described below. However, the embodiments described blow should not be construed as limiting the production method of a rare earth magnet of the present disclosure.

In the production method of a rare earth magnet of the present disclosure and the production apparatus used therefor, a magnetic raw material powder containing Sm, Fe and N and a modifier powder containing metallic Zn are used. As to the magnetic raw material powder containing Sm, Fe and N, its magnetic properties are known to deteriorate when a stress is loaded on a particle of the powder. As the stress loaded is larger, the magnetic properties are more likely to deteriorate. In particular, when the temperature of the magnetic raw material powder is 100°C or more, if a stress is loaded on a particle of the powder, deterioration of the magnetic properties is prominent.

The Sm-Fe-N-based rare earth magnet is produced by molding the mixed powder, and therefore in order to enhance the magnetic properties, it is preferable to improve the density of the magnet obtained by molding. For improving the density of the magnet, it is effective to enhance the molding pressure. However, as described above, when a large stress is loaded on a particle of the magnetic raw material powder, the magnetic properties are likely to deteriorate. Accordingly, even when the density of the magnet is improved by enhancing the molding pressure, desired magnetic properties, particularly the desired coercive force, are not obtained in many cases.

The present inventors have found the followings as to molding of the mixed powder.

The method for molding the mixed poser includes liquid phase sintering. In the present description, the liquid phase sintering means that the mixed powder is sintered in the state where the magnetic raw material powder in the mixed powder is not melted and at least a part of the modifier powder is melted.

At the time of liquid phase sintering of the mixed powder, a pressure large enough for liquid phase sintering (hereinafter, sometimes referred to as "sintering pressure") is loaded on the mixed powder. In the conventional production method, the mixed powder is started to be heated at the same time of loading a sintering pressure on the mixed powder. Accordingly, during the period from starting the load of a sintering pressure on the mixed powder until reaching a temperature high enough to melt at least a part of the modifier powder in the mixed powder, a liquid phase is not present in the mixed powder. A large stress is therefore believed to be loaded on a particle of the magnetic raw material powder in the mixed powder, resulting in deterioration of the magnetic properties.

To cope therewith, the present inventors have found that the mixed powder should be heated while loading a pressure on the mixed powder to an extent of not deteriorating the magnetic properties of the magnetic raw material powder in the mixed powder or without applying a pressure, until at least a part of the modifier powder in the mixed poser melts. It has then been found that in the state where at least a part of the modifier powder in the mixed powder is melted, even when a sintering pressure is loaded on the mixed powder, the melt functions as a lubricant and/or a buffer and the stress loaded on a particle of the magnetic raw material powder in the mixed powder can thereby be reduced.

The configuration requirements of the production method of a rare earth magnet of the present disclosure and the production apparatus used therefor, which have been accomplished based on the discovery, etc. above, are described below.

### «Production Method»

First, the production method of a rare earth magnet of the present disclosure (hereinafter, sometimes referred to as "production method of the present disclosure") is described.

### <Mixing Step>

In the production method of the present disclosure, a magnetic raw material powder and a modifier powder are mixed to obtain a mixed powder.

The magnetic raw material powder contains Sm, Fe and N. The magnetic raw material powder may contain a magnetic phase represented, for example, by the composition formula (Sm₍₁₋ᵢ₎Rᵢ)₂(Fe₍ᵢ₋ⱼ₎Coⱼ)₁₇Nₕ. The rare earth magnet (hereinafter, sometimes referred to as "product") obtained by the production method of the present disclosure exhibits magnetic properties derived from the magnetic phase in the magnetic raw material powder. Incidentally, i, j and h are a molar ratio.

The magnetic phase in the magnetic raw material powder may contain R within the range not impairing the effects of the production method of the present disclosure and the magnetic properties of the product thereof. Such a range is represented by i in the composition formula above. i may be, for example, 0 or more, 0.10 or more, or 0.20 or more, and may be 0.50 or less, 0.40 or less, or 0.30 or less. R is one or more elements selected from Y, Zr and rare earth elements other than Sm. In the present description, the rare earth elements are Sc, La, Ce, Pr, Nd, Pm, Sm, Eu, Gd, Tb, Dy, Ho, Er, Tm, Yb, and Lu.

The magnetic phase in the magnetic raw material powder may contain Co within the range not impairing the effects of the production method of the present disclosure and the magnetic properties of the product thereof. Such a range is represented by j in the composition formula above. j may be 0 or more, 0.10 or more, or 0.20 or more, and may be 0.52 or less, 0.40 or less, or 0.30 or less.

The magnetic phase contributes to development and enhancement of the magnetic properties owing to the presence of interstitial N in a crystal grain represented by (Sm₍₁₋ᵢ₎Rᵢ)₂(Fe₍₁₋ⱼ₎Coⱼ)₁₇. Accordingly, h is preferably 1.5 or more, more preferably 2.0 or more, still more preferably 2.5 or more. On the other hand, h is preferably 4.5 or less, more preferably 4.0 or less, still more preferably 3.5 or less.

With respect to (Sm₍₁₋ᵢ₎Rᵢ)₂(Fe₍₁₋ⱼ₎Coⱼ)₁₇Nₕ, typically, R is substituted at the position of Sm of Sm₂(Fe₍₁₋ⱼ₎Coⱼ)₁₇Nₕ, but the configuration is not limited thereto. For example, part of interstitial R may be arranged in Sm₂(Fe₍₁₋ⱼ₎Coⱼ)₁₇Nₕ.

In addition, with respect to (Sm₍₁₋ᵢ₎Rᵢ)₂(Fe₍₁₋ⱼ₎Coⱼ)₁₇Nₕ, typically, Co is substituted at the position of Fe of (Sm₍₁₋ᵢ₎Rᵢ)₂Fe₁₇Nₕ, but the configuration is not limited thereto. For example, part of interstitial Co may be arranged in (Sm₍₁₋ᵢ₎Rᵢ)₂Fe₁₇Nₕ.

Furthermore, with respect to (Sm₍₁₋ᵢ₎Rᵢ)₂(Fe₍₁₋ⱼ₎Coⱼ)₁₇Nₕ, h may be from 1.5 to 4.5, but the phase is typically (Sm₍₁₋ᵢ₎Rᵢ)₂(Fe₍₁₋ⱼ₎Coⱼ)₁₇N₃. The content of (Sm₍₁₋ᵢ₎Rᵢ)₂(Fe₍₁₋ⱼ₎Coⱼ)₁₇N₃ relative to the entire (Sm₍₁₋ᵢ₎Rᵢ)₂(Fe₍₁₋ⱼ₎Coⱼ)₁₇Nₕ is preferably 70 mass% or more, more preferably 80 mass% or more, still more preferably 90 mass%. On the other hand, it is not necessary for all (Sm₍₁₋ᵢ₎Rᵢ)₂(Fe₍₁₋ⱼ₎Coⱼ)₁₇Nₕ to be (Sm₍₁₋ᵢ₎Rᵢ)₂(Fe₍₁₋ⱼ₎Coⱼ)₁₇N₃. The content of (Sm₍₁₋ᵢ₎Rᵢ)₂(Fe₍₁₋ⱼ₎Coⱼ)₁₇N₃ relative to the entire (Sm₍₁₋ᵢ₎Rᵢ)₂(Fe₍₁₋ⱼ₎Coⱼ)₁₇Nₕ may be 98 mass% or less, 95 mass% or less, or 92 mass% or less.

The magnetic raw material powder may contain oxygen and M¹ within the range not impairing the effects of the production method of the present disclosure and the magnetic properties of the product thereof, in addition to the magnetic phase represented by (Sm₍₁₋ᵢ₎Rᵢ)₂(Fe₍₁₋ⱼ₎Coⱼ)₁₇Nₕ. From the viewpoint of ensuring the magnetic properties of the product, the content of the magnetic phase represented by (Sm₍₁₋ᵢ₎Rᵢ)₂(Fe₍₁₋ⱼ₎Coⱼ)₁₇Nₕ relative to the entire magnetic raw material powder may be 80 mass% or more, 85 mass% or more, or 90 mass% or more. On the other hand, even when the content of the magnetic phase represented by (Sm₍₁₋ᵢ₎Rᵢ)₂(Fe₍₁₋ⱼ₎Coⱼ)₁₇Nₕ relative to the entire magnetic raw material powder is not excessively increased, there is no practical problem. Accordingly, the content may be 97 mass% or less, 95 mass% or less, or 93 mass% or less. The remainder of the magnetic phase represented by (Sm₍₁₋ᵢ₎Rᵢ)₂(Fe₍₁₋ⱼ₎Coⱼ)₁₇Nₕ is the content of oxygen and M¹.

M¹ are an element for enhancing a specific property substantially without reducing the magnetic properties of the product, and an unavoidable impurity element. The element for enhancing a specific property includes one or more elements selected from Ga, Ti, Cr, Zn, Mn, V, Mo, W, Si, Re, Cu, Al, Ca, B, Ni, and C. The unavoidable impurity element indicates an impurity that is unavoidably contained at the time of production, etc. of the magnetic raw material powder or causes a significant rise in the production cost for avoiding its inclusion

In the production method of the present disclosure, a modifier powder is mixed with the magnetic raw material powder. Oxygen in the magnetic raw material powder is absorbed by the modifier powder, and the magnetic properties of the product, particularly, the coercive force can thereby be enhanced. The content of oxygen in the magnetic raw material may be determined by taking into account the amount in which oxygen in the magnetic raw material is absorbed by the modifier powder. The oxygen content of the magnetic raw material powder is preferably lower relative to the entire magnetic raw material powder and, for example, preferably 2.00 mass% or less, more preferably 1.34 mass% or less, still more preferably 1.05 mass% or less. On the other hand, if the content of oxygen in the magnetic raw material powder is extremely reduced, this leads to an increase in the production cost. Accordingly, the content of oxygen in the magnetic raw material powder may be 0.1 mass% or more, 0.2 mass% or more, or 0.3 mass% or more, relative to the entire magnetic raw material powder.

The average particle diameter of the magnetic raw material powder is not particularly limited. The average particle diameter of the magnetic raw material powder may be, for example, 1 µm or more, 5 µm or more, or 10 µm or more, and may be 1,000 µm or less, 500 µm or less, 100 µm or less, 50 µm or less, or 30 µm or less. In the present description, unless otherwise indicated, the average particle diameter is an average of equivalent-circle diameters of projected areas.

The modifier powder contains metallic Zn. The modifier powder may contain an element other than metallic Zn, within the range not impairing the effects of the production method of the present disclosure and the magnetic properties of the product thereof. Such elements are, typically, a transition metal element and oxygen (O).

As the content of oxygen in the modifier powder is lower, oxygen in the magnetic raw material powder is more likely to be absorbed. Accordingly, the oxygen content in the modifier powder may be 1.0 mass% or less, 0.5 mass% or less, 0.3 mass% or less, or 0.1 mass% or less, relative to the entire modifier powder. On the other hand, if the oxygen content in the modifier powder is excessively reduced relative to the modifier powder, this leads to an increase in the production cost. From this viewpoint, the oxygen content in the modifier powder may be 0.01 mass% or more, 0.03 mass% or more, or 0.05 mass% or more, relative to the entire modifier powder. Incidentally, oxygen in the modifier may be an oxide or may be adsorbed to another element.

In the modifier powder, the content of the element other than Zn and oxygen may be 25.0 mass% or less, 20.0 mass% or less, 10.0 mass% or less, 5.0 mass% or less, 3.0 mass% or less, or 1.0 mass% or less. On the other hand, if the content of the element other than Zn and oxygen in the modifier powder is excessively reduced relative to the modifier powder, this leads to an increase in the production cost. From this viewpoint, the content of the element other than Zn and oxygen in the modifier powder may be 0.1 mass% or more, 0.5 mass% or more, or 0.8 mass% or more, relative to the entire modifier powder.

The metallic Zn content of the modifier powder is preferably 70.0 mass% or more. Within this range, the effects of the production method of the present disclosure are easily obtained, and the magnetic properties of the product are less likely to deteriorate. From this viewpoint, the metallic Zn content of the modifier powder is preferably larger and may be 80.0 mass% or more, 90.0 mass% or more, 95.0 mass% or more, or 98.0 mass% or more. On the other hand, even when all the modifier powder is not metallic Zn, the effects of the present invention can be obtained. From this viewpoint, the content of metallic Zn of the modifier powder may be 99.5 mass% or less, 99.0 mass% or less, or 98.5 mass% or less. Incidentally, in the present description, the metallic Zn means Zn not alloyed with a metallic element other than Zn.

The particle diameter of the modifier powder may be appropriately determined so as to facilitate penetration of a particle of the modifier powder into between particles of the magnetic raw material powder in the mixed powder state. By determining in this way, the magnetic properties of the product, particularly, the coercive force can be enhanced. The average particle diameter of the modifier powder is preferably 20 µm or less, more preferably 10 µm or less, still more preferably 5 µm or less. On the other hand, if the particle diameter of the modifier powder is excessively small, particles of the modifier powder are aggregated, making it rather difficult for a particle of the modifier power to penetrate between particles of the magnetic raw material powder. From the viewpoint of suppressing aggregation, the average particle diameter of the modifier powder is preferably 1 µm or more, more preferably 2 µm or more, still more preferably 3 µm or more.

As for the blending amount of the modifier powder, the content of Zn component is preferably from 1 to 20 mass% relative to the entire mixed powder. When the content of Zn component is 1 mass% or more, the effect of the modifier powder of absorbing oxygen in the magnetic raw material powder can be substantially recognized. Although not bound by theory, the metallic Zn becomes an oxide of Zn and thereby absorbs oxygen in the magnetic raw material powder. In addition, the function as a lubricant and/or a buffer can be substantially recognized at the time of liquid phase sintering. In view of oxygen absorption as well as a lubricant and/or a buffer, the content of Zn component is more preferably 10 mass% or more, still more preferably 15 mass% or more. On the other hand, if the content of Zn component is excessively large, a Zn component remaining in the product increases, and the magnetic phase accordingly decreases, as a result, the magnetic properties are reduced. From the viewpoint of suppressing reduction in the magnetic properties, the content of Zn component is more preferably 18 mass% or less, still more preferably 16 mass% or less.

The mixing machine used for the mixing of the magnetic raw material powder and the modifier powder is not particularly limited. The mixing machine includes a Muller wheel mixer, an agitator mixer, a mechanofusion, a V-type mixer, a ball mill, etc. The V-type mixer is an apparatus having a container formed by connecting two cylindrical containers in V shape, in which the container is rotated to cause the powders in the container to repeatedly experience aggregation and separation due to gravity and centrifugal force and thereby be mixed.

The modifier powder contains a large amount of soft metallic Zn. The surface of a particle of the magnetic raw material powder is thereby coated with metallic Zn during mixing of the magnetic raw material powder and the modifier powder. Oxygen in the magnetic raw material powder coated with metallic Zn is readily absorbed into the metallic Zn. In addition, the function as a lubricant and/or a buffer is also enhanced. From the viewpoint of coating with metallic Zn, use of a V-type mixer is more preferred, and use of a ball mill is still more preferred. Incidentally, in the case of using a ball mill, the balls are of course removed from the mixed powder after the mixing.

### <Filling Step>

The mixed powder is filled into a molding die to obtain a filled product. As the embodiment of the filled product, a filled product directly after filling the mixed powder into a cavity of the molding die may be obtained, or a filled product having an oriented magnetic filed may be obtained by filling the mixed powder into a cavity of the molding die and compacting the powder in a magnetic field. Alternatively, a compact obtained by filling the mixed powder into a cavity of the molding die and compacting the powder in a non-magnetic field may be used as the filled product.

The method for compacting the powder in a magnetic field may be a method commonly employed at the time of production of a magnet. The magnetic field applied may be, for example, 0.3 T or more, 0.5 T or more, or 0.8 T or more, and may be 3.0 T or less, 2.0 T or less, or 1.5 T or less.

In order to avoid deteriorating the magnetic properties by loading an excessive stress from on the particle of the magnetic raw material powder, as long as the magnetic field orientation is possible, the pressure at the time of compacting is preferably smaller. In addition, as described above, when the temperature of the magnetic raw material powder is 100°C or more, if a stress is loaded on the particle of the magnetic raw material powder, deterioration of the magnetic properties is prominent, and for this reason, the compacting temperature is preferably 80°C or less, more preferably 50°C or less, still more preferably room temperature. In the present description, the room temperature means 25°C. At a temperature of less than 100°C, the pressure during compacting may be, for example, 50 MPa or more, 80 MPa or more, or 120 MPa or more, and may be 1,000 MPa or less, 500 MPa or less, or 250 MPa or less.

### <Intermediate Molding Step>

At least a part of the modifier powder in the filled product is melted while loading a pressure of less than 20 MPa to the filled product to obtain an intermediate molded product. In the intermediate molded product, at least a part of the modifier powder is melted, and the magnetic raw material powder is in the solid solution state (unmelted state). As long as the intermediate molded product is obtained, the method for pressurizing and heating the filled product is not particularly limited. For example, the method includes a method of applying a pressure to the filled product by using a heated molding die.

The filled product contains the magnetic raw material powder. As described above, when a stress is loaded on the particle of the magnetic raw material powder, the magnetic properties deteriorate. In particular, when the temperature of the magnetic raw material powder is 100°C or more, if a stress is loaded on the particle of the powder, deterioration of the magnetic properties is prominent.

In the production of the Sm-Fe-N-based rare earth magnet, the mixed powder is subjected to liquid phase sintering. In turn, the temperature of the mixed powder becomes 100°C or more. Accordingly, first, a pressure of less than 20 MPa is loaded on the filled product. When the pressure is less than 20 MPa, even if a stress is loaded on the particle of the magnetic raw material powder, deterioration of the magnetic properties is at a level causing substantially no problem. As long as the magnetic raw material powder and modifier powder in the filled product can be brought into intimate contact both in solid solution state, from the viewpoint of avoiding deterioration of the magnetic properties as much as possible, the pressure is preferably lower. For example, the pressure is preferably 15 MPa or less, more preferably 10 MPa or less, still more preferably 5 MPa or less, and the mixed powder may also be sintered in a non-pressure state. The non-pressure means a state where particles in the filled product are substantially in intimate contact with each other but a stress is not loaded on the particle in the filled product.

Since the melting point of Zn is 419.5°C, when the temperature of the filled product reaches 419.5°C, at least a part of the modifier powder in the filled product melts, whereas the magnetic raw material powder remains as a solid solution. Accordingly, the intermediate molded product assumes a semi-melt state.

When the temperature of the filled product is 419.5°C or more, at least a part of the modifier powder melts. From this viewpoint, the temperature may be 425.0°C or more, 430.0°C or more, 440.0°C or more, 450.0°C or more, or 460.0°C or more. On the other hand, when the temperature of the filled product is 500°C or less, the magnetic phase in the magnetic raw material powder can be prevented from decomposing to cause separation of N from the magnetic phase. From this viewpoint, the temperature of the filled product may be 495°C or less, 490°C or less, 485°C or less, or 480°C or less. The method for controlling the temperature of the filled product to such a temperature is described later.

The time for which the filled product is heated may be appropriately determined according to the mass, etc. of the filled body. For example, the time may be, after at least a part of the filled product started melting, 1 minute or more, 3 minutes or more, or 5 minutes or more, and may be 60 minutes or less, 45 minutes or less, 30 minutes or less, or 20 minutes or less.

In order to prevent oxidation of the filled product and the intermediate molded product, it is preferable to heat the filled product and the intermediate molded product in an inert gas atmosphere. The inert gas atmosphere includes a nitrogen gas atmosphere.

### <Liquid Phase Sintering Step>

The intermediate molded product is subjected to liquid phase sintering at a temperature of 20 MPa or more to obtain a sintered body. The liquid phase sintering may be performed as follows, for example. The particle of the magnetic raw material powder in the solid solution state and the modifier powder in the state of at least a part thereof being melted are held in the intimate contact state by loading a pressure of 20 MPa or more on the intermediate molded product. Thereafter, while still loading a pressure of 20 MPa or more on the intermediate molded product, the intermediate molded product was cooled below the melting point of Zn and thereby solidified to obtain a sintered body. The holding temperature is the same as the temperature of the filled product in the intermediate molding step. The sintered body is the Sm-Fe-N-based rare earth magnet, i.e., the product obtained by the production method of the present disclosure.

In the intermediate molded product, at least a part of the modifier powder is melted, and therefore even when a pressure of 20 MPa or more is loaded on the intermediate molded product, the melt functions as a lubricant and/or a buffer, so that a stress loaded on the particle of the magnetic raw material powder in the intermediate molded product can be reduced at the time of liquid phase sintering. Consequently, the density of the sintered body, i.e., the product can be improved without deteriorating the magnetic properties of the magnetic raw material powder, particularly, the coercive force. As a result, the magnetic properties of the product, particularly, the coercive force, can be enhanced.

From the viewpoint of improving the density of the product, the pressure loaded on the intermediate molded product is preferably larger. For this reason, the pressure loaded on the intermediate molded product is preferably 100 MPa or more, more preferably 1,000 MPa or more, still more preferably 2,000 MPa or more. On the other hand, even when an excessive pressure is loaded on the intermediate molded product, the effect of improving the density of the product is saturated. In addition, loading an excessive pressure shortens the life of the molding die. From the viewpoint of avoiding loading an excessive pressure, the pressure loaded on the intermediate molded product is preferably 50,000 MPa or less, more preferably 10,000 MPa or less, still more preferably 5,000 MPa or less.

The time for which the liquid phase sintering is performed may be appropriately determined according to the mass, etc. of the intermediate molded product but may be, for example, 1 minute or more, 3 minutes or more, or 5 minutes or more, and may be 120 minutes or less, 60 minutes or less, 30 minutes or less, 20 minutes or less, or 10 minutes or less.

### «Production Apparatus»

Next, the production apparatus used for the production method of the present disclosure (hereinafter, sometimes referred to as "production apparatus of the present disclosure" or "production apparatus") is described.

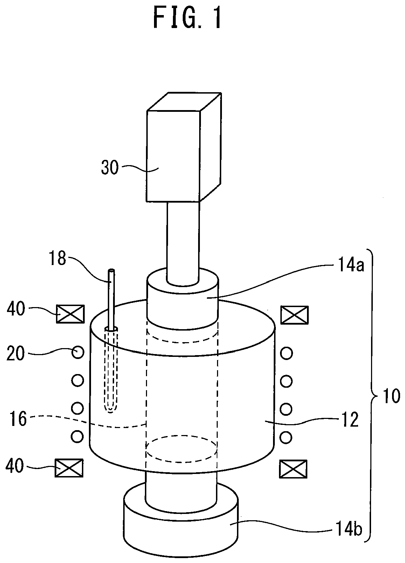

Fig. 1 is a schematic diagram illustrating a production apparatus of the present disclosure. The production apparatus 100 of the present disclosure has a molding die 10, a heater 20, and a pressure member 30. Each of the molding die 10, the heater 20, and the pressure member 30 is described below.

### <Molding Die>

The molding die has a main die 12 and punch dies 14a and 14b. The main die 12 has a through hole 16. The punch dies 14a and 14b are inserted at both ends of the through hole 16. In the apparatus illustrated in Fig. 1, the shape of the through hole 16 is cylindrical but as long as the punch dies 14a and 14b are slidable in the axial direction of the through hole 16, the shape is not limited thereto. Incidentally, the axial direction of the through hole 16 is the vertical direction in Fig. 1.

The through hole 16 is plugged at both ends by the punch dies 14a and 14b to form a cavity. The mixed powder is filled into the cavity. In this way, the molding die 10 is filled with the mixed powder.

In the apparatus illustrated in Fig. 1, the punch die 14a is a movable type, and the punch 14b is a stationary type, but the configuration is not limited thereto, and both punch dies 14a and 14b may be a movable type. More specifically, it may be sufficient if at least either one of the punch dies 14a and 14b is a movable type. In addition, the punch die assigned to a stationary type may be integral with the main die 12.

In the apparatus illustrated in Fig. 1, the apparatus further has an electromagnetic coil 40 outside the molding die 10. The electromagnetic coil 40 makes it possible to generate a magnetic field within the cavity of the molding die 10 and obtain a filled product having an oriented magnetic field.

In the intermediate molding step, the punch die 14a is slid to bring the magnetic raw material powder and the modifier powder in the filled product into intimate contact. This facilitates penetration of a melt of the modifier powder into between particles of the magnetic raw material powder. In the liquid phase sintering step, the liquid phase sinterability is enhanced by sliding the punch die 14a to put the melt of the modifier powder into intimate contact with the magnetic raw material powder. The density of the product is thereby improved. As a result, the magnetic properties of the product, particularly, the coercive force, are enhanced.

In the intermediate molding step, the filled product is held at a temperature where at least a part of the modifier powder melts. In the liquid phase sintering step, the intermediate molded product is held at a temperature where at least a part of the modifier powder melts and thereafter, the intermediate molded product is cooled, whereby a sintered body can be obtained. When the temperature of the sintered body is 380°C or less, 360°C or less, 340°C or less, or 300°C or less, after taking out the sintered body from the molding die 10, deformation, etc. of the sintered body is hardly caused.

The temperature control of the filled product and the intermediate molded product is achieved, typically, by measuring and controlling the temperature of the molding die 10, but the method is not limited thereto.

The method for controlling the temperature of the filled product and intermediate molded product without measuring and controlling the temperature of the molding die 10 includes, for example, a method of creating a calibration curve by measuring in advance the relationship of the output of the heater 20 and the elapsed time during the output (heating time) with the temperature of the filled product and intermediate molded product. In this method, the output of the heater 20 and the elapsed time during the output (heating time) are controlled based on the calibration curve.

In the case of achieving the temperature control of the filled product and the intermediate molded product by measuring and controlling the temperature of the molding die 10, the installation position of the temperature sensor and the like are appropriately determined by taking into account the position of the heater 20 and the materials of the main die 12 and the punch dies 14a and 14b.

For example, in the apparatus illustrated in Fig. 1, the heater 20 is disposed on an outer periphery of the main die 12. Since the main die 12 is located at the position near the heater 20, the main die 12 can receive a large amount of thermal energy from the heater 20. The thermal energy that the main die 12 receives from the heater 20 is induction heating energy when the heater 20 is an induction heating coil, and is radiation heat (radiant heat) energy when the heater 20 is a resistance heating heater.

On the other hand, since the punch dies 14a and 14b are located at a position distant from the heater 20, the punch dies 14a and 14b can hardly receive thermal energy from the heater 20. Accordingly, the filled product and/or the intermediate molded product are heated by the main die 12 and cooled by the punch dies 14a and 14b.

The main die 12 and the punch dies 14a and 14b are preferably made of a material capable of withstanding high temperatures and high pressures during liquid phase sintering. From the viewpoint that the thermal energy from the heater 20 is likely to be transferred to the filled product and/or the intermediate molded product, the main die 12 is preferably made of a material having high thermal conductivity. In this case, the time lag between the temperature rise of the main die 12 and the temperature rise of the filled product and/or the intermediate molded product is reduced.

On the other hand, from the viewpoint of preventing the filled product and the intermediate molded product from being excessively cooled, the punch dies 14a and 14b are preferably made of a material having low thermal conductivity. However, if the thermal conductivity is excessively low, the filled product and/or the intermediate molded product are readily overheated. For these reasons, it is preferred that the thermal conductivity of the main die 12 is not greatly different from the thermal conductivity of the punch dies 14a and 14b. For example, the thermal conductivity of the main die 12 may be from 0.5 to 1.5 times the thermal conductivity of the punch dies 14a and 14b.

In order to efficiently heat the filled product and/or the intermediate molded product and reduce the above-described time lag and overheating, the production apparatus of the present disclosure may be, for example, as now described. That is, the heater 20 may be an induction heating coil, the heater 20 may be disposed on an outer periphery of the main die 12, the main die 12 and the punch dies 14a and 14b may be made of tungsten carbide, and the temperature sensor 18 may be disposed in the main die 12. The temperature sensor 18 is, typically, a thermocouple.

In the above-described apparatus, in order to maintain the state of at least a part of the modifier powder in the filled product and/or the intermediate molded product being melted, the temperature of the main die 12 may be 450°C or more, 460°C or more, or 470°C or more. On the other hand, in order to prevent decomposition of the magnetic phase in the filled product and/or the intermediate molded product, the temperature of the main die 12 may be 500°C or less, 490°C or less, or 480°C or less.

### <Heater>

The heater 20 heats the molding die 10. In the apparatus of Fig. 1, the heater 20 is disposed on an outer periphery of the main die 12 and mainly heats the main die 12, but the present disclosure is not limited thereto. The type of the heater 20 includes, for example, an induction heating coil, a resistance heating coil, an infrared heater, and a combination thereof. From the viewpoint of efficiently heating the main die 12, the heater 20 is preferably an induction heating coil.

### (Pressure Member)

The pressure member 30 loads a pressure on the filled product and the intermediate molded product via the punch dies 14a and 14b. The pressure member loads a pressure on the filled product in the intermediate molding step and loads a pressure on the intermediate molded product in the liquid phase sintering step. Incidentally, in the case of obtaining the intermediate molded product by a non-pressure process, a pressure is of course not loaded on the filled product.

In the apparatus illustrated in Fig. 1, the pressure member 30 is connected only to the punch die 14a, but the present disclosure is not limited thereto, and the pressure member 30 may be connected to both of the punch dies 14a and 14b. More specifically, the pressure member 30 may be connected to at least either one of the punch dies 14a and 14b.

The pressure member 30 includes a fluid cylinder, an electric cylinder, and a combination thereof. For example, while one of the punch dies 14a and 14b is a fluid cylinder, the other may be an electric cylinder. More specifically, the pressure member 30 may include at least one of a fluid cylinder and an electric cylinder.

The fluid cylinder includes a hydraulic cylinder, a pneumatic cylinder, etc. From the viewpoint of achieving liquid phase sintering by a large pressure, a hydraulic cylinder is preferred. From the viewpoint of accurately controlling the pressure, an electric cylinder is preferred.

### [EXAMPLES]

The production method of a rare earth magnet of the present disclosure and the production apparatus used therefor are described more specifically below by referring to Examples and Comparative Examples. Incidentally, the production method of a rare earth magnet of the present disclosure and the production apparatus used therefor are not limited to the conditions employed in the following Examples.

### «Preparation of Sample»

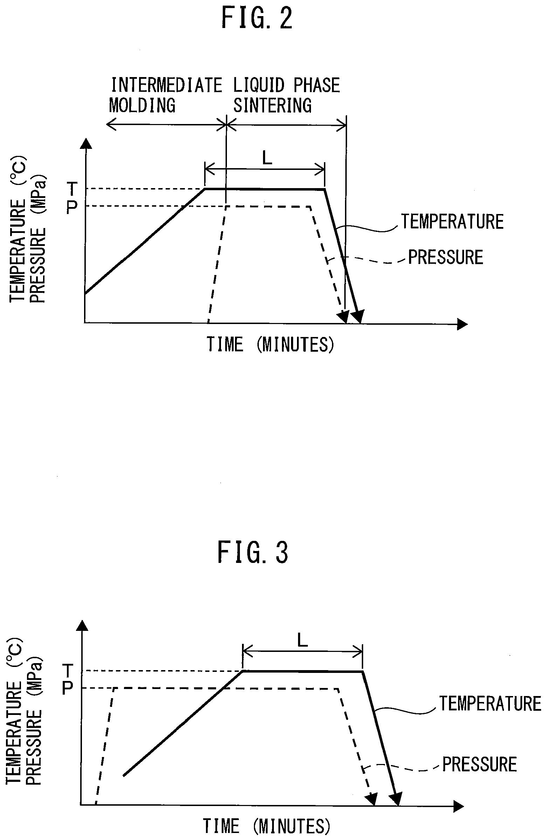

A sample of the Sm-Fe-N-based rare earth magnet was prepared using the production apparatus of the apparatus illustrated in Fig. 1. The main die 12 and the punch dies 14a and 14b were prepared using tungsten carbide, and the temperature sensor 18 was disposed in the main die 12. The temperature of the filled product and intermediate molded product (sample) was controlled by measuring and controlling the temperature of the main die 12. Incidentally, prior to the preparation of the sample, a temperature difference between the temperature of the main die 12 and the temperature of the filled product and intermediate molded product (sample) was previously examined, as a result, the temperature of the main die 12 was higher by 5 to 10°C than the temperature of the filled product and intermediate molded product. Accordingly, when the temperature of the main die 12 (the temperature T of Fig. 2 described later) was 400°C and 425°C, at least a part of the modifier powder was not melted in the intermediate molding step.

### (Examples 1 and 2)

A magnetic raw material powder and a modifier powder were mixed over 15 minute by using a V-type mixer to obtain a mixed powder. With respect to the magnetic raw material powder, the content of Sm₂Fe₁₇N₃ was 98 mass% or more, and the content of oxygen was 1.34 mass%, relative to the entire magnetic raw material powder. With respect to the modifier powder, a metallic Zn powder was used, and the content of oxygen was 0.032 mass% relative to the entire modifier powder. The particle diameter of the magnetic raw material powder was 3 µm. The particle diameter of the modifier powder was 20 µm. The magnetic raw material powder and the modifier powder were blended such that the content of Zn component becomes 15 mass% relative to the entire mixed powder.

In a magnetic field at room temperature, 1.0 g of the mixed powder of magnetic raw material powder and modifier powder was compacted into a cylindrical shape with a diameter of 10 mm and a height of 2 mm to obtain a filled product having an oriented magnetic field. The magnetic field applied was 1.0 T, and the molding pressure was 100 MPa.

The filled product was housed in the molding die 10, and the main die 12 was heated using the heater 20 in a non-pressure state to melt at least a part of the modifier powder in the filled product and thereby obtain an intermediate molded product. Thereafter, the intermediate molded product was subjected to liquid phase sintering to obtain a sintered body. The thus-obtained sintered body was used as samples of Examples 1 and 2. Fig. 2 illustrates heating and pressurizing patterns when samples of Examples 1 and 2 were prepared. The temperature illustrated in Fig. 2 is the temperature of the main die 12. Furthermore, specific numerical values of the conditions in the heating and pressurizing patterns illustrated in Fig. 2 are shown in Table 1.

### <Comparative Examples 1 and 2>

Samples were prepared in the same manner as in Examples 1 and 2 except that a pressure necessary for liquid phase sintering was applied to the filled product housed in the molding die 10 at the same time of starting heating the main die 12 by using the heater 20. Fig. 3 illustrates heating and pressurizing patterns when samples of Comparative Examples 1 and 2 were prepared. The temperature illustrated in Fig. 3 is the temperature of the main die 12. Furthermore, specific numerical values of the conditions in the heating and pressurizing patterns illustrated in Fig. 3 are shown in Table 1.

### <Examples 3 to 7>

Samples of Examples 3 to 7 were prepared in the same manner as in Examples 1 and 2 except that the filled product was obtained by filling 2.0 g of the mixed powder into the molding die 10 without orienting the magnetic field and the conditions shown in Table 1 were employed.

### <Comparative Examples 3 to 9>

Samples of Comparative Examples 3 to 9 were prepared in the same manner as in Comparative Examples 1 and 2 except that the filled product was obtained by filling 2.0 g of the mixed powder into the molding die 10 without orienting the magnetic field and the conditions shown in Table 1 were employed.

### <Examples 8 to 12>

Samples of Examples 8 to 12 were prepared in the same manner as in Examples 3 to 7 except that the content of oxygen was 1.05 mass% relative to the entire magnetic raw material powder and the conditions shown in Table 1 were employed.

### <Examples 13 to 36 and Comparative Examples 10 to 19>

Samples of Examples 13 to 36 and Comparative Examples 10 to 19 were prepared in the same manner as in Examples 1 and 2 except that the conditions shown in Table 2 were employed. In all of the samples of Examples 13 to 36 and Comparative Examples 10 to 19, a sample according to the heating and pressurizing patterns of Fig. 2 was prepared, but in the case where the temperature T of the main die 12 was 400°C and 425°C, at least a part of the modifier powder was not melted, and therefore these samples were regarded as Comparative Examples.

### «Evaluation»

Each sample was measured for the coercive force (H_{cj}) and the residual magnetization (Bj). The measurements were performed using a pulsed BH tracer and a vibrating sample magnetometer (VSM), manufactured by Toei Industry Co., Ltd. The measurement was performed at room temperature.

The results are shown in Tables 1 and 2.

### [Table 1-1]

**Table 1-1**

| | Magnetic Raw Material Powder | | Modifier Powder | | | Magnetic Field Orientation | Heating Pressurizing Patterns | Pressure P (MPa) | Temperature T(°C) | Sintering Time L (min.) | Coercive Force Hcj (kOe) | Residual Magnetization Bj (T) |
|---|---|---|---|---|---|---|---|---|---|---|---|---|
| | Oxygen Content (mass%) | Average Particle Diameter (µm) | Oxygen Content (mass%) | Average Particle Diameter (µm) | Amount of Zn Component (mass%) | | | | | | | |
| Example 1 | 1.34 | 3 | 0.032 | 20 | 15 | oriented | Fig. 2 | 1000 | 450 | 10 | 12.9 | 0.70 |
| Example 2 | 1.34 | 3 | 0.032 | 20 | 15 | oriented | Fig. 2 | 1000 | 475 | 5 | 13.5 | 0.71 |
| Comparative Example 1 | 1.34 | 3 | 0.032 | 20 | 15 | oriented | Fig. 3 | 1000 | 450 | 10 | 8.3 | 0.77 |
| Comparative Example 2 | 1.34 | 3 | 0.032 | 20 | 15 | oriented | Fig. 3 | 1000 | 475 | 5 | 8.1 | 0.71 |
| Example 3 | 1.34 | 3 | 0.032 | 20 | 15 | none | Fig. 2 | 300 | 450 | 15 | 13.1 | 0.40 |
| Example 4 | 1.34 | 3 | 0.032 | 20 | 15 | none | Fig. 2 | 300 | 450 | 10 | 15.0 | 0.35 |
| Example 5 | 1.34 | 3 | 0.032 | 20 | 15 | none | Fig. 2 | 300 | 450 | 30 | 13.3 | 0.42 |
| Example 6 | 1.34 | 3 | 0.032 | 20 | 15 | none | Fig. 2 | 500 | 450 | 15 | 14.8 | 0.45 |
| Example 7 | 1.34 | 3 | 0.032 | 20 | 15 | none | Fig. 2 | 500 | 475 | 30 | 13.1 | 0.48 |

### [Table 1-2]

**Table 1-2**

| | Magnetic Raw Material Powder | | Modifier Powder | | | Magnetic Field Orientation | Heating Pressurizing Patterns | Pressure P (MPa) | Temperature T (°C) | Sintering Time L (min.) | Coercive Force Hcj (kOe) | Residual Magnetization Bj (T) |
|---|---|---|---|---|---|---|---|---|---|---|---|---|
| | Oxygen Content (mass%) | Average Particle Diameter (µm) | Oxygen Content (mass%) | Average Particle Diameter (µm) | Amount of Zn Component (mass%) | | | | | | | |
| Comparative Example 3 | 1.34 | 3 | 0.032 | 20 | 15 | none | Fig. 3 | 300 | 425 | 15 | 9.8 | 0.43 |
| Comparative Example 4 | 1.34 | 3 | 0.032 | 20 | 15 | none | Fig. 3 | 300 | 400 | 15 | 6.4 | 0.40 |
| Comparative Example 5 | 1.34 | 3 | 0.032 | 20 | 15 | none | Fig. 3 | 1000 | 400 | 15 | 7.8 | 0.71 |
| Comparative Example 6 | 1.34 | 3 | 0.032 | 20 | 15 | none | Fig. 3 | 1000 | 450 | 5 | 9.4 | 0.69 |
| Comparative Example 7 | 1.34 | 3 | 0.032 | 20 | 15 | none | Fig. 3 | 1000 | 425 | 10 | 9.1 | 0.66 |
| Comparative Example 8 | 1.34 | 3 | 0.032 | 20 | 15 | none | Fig. 3 | 1000 | 450 | 5 | 9.6 | 0.69 |
| Comparative Example 9 | 1.34 | 3 | 0.032 | 20 | 15 | none | Fig. 3 | 1000 | 475 | 5 | 10.1 | 0.69 |

### [Table 1-3]

**Table 1-3**

| | Magnetic Raw Material Powder | | Modifier Powder | | | Magnetic Field Orientation | Heating Pressurizing Patterns | Pressure P (MPa) | Temperature T (°C) | Sintering Time L (min.) | Coercive Force Hcj (kOe) | Residual Magnetization Bj (T) |
|---|---|---|---|---|---|---|---|---|---|---|---|---|
| | Oxygen Content (mass%) | Average Particle Diameter (µm) | Oxygen Content (mass%) | Average Particle Diameter (µm) | Amount of Zn Component (mass%) | | | | | | | |
| Example 8 | 1.05 | 3 | 0.032 | 20 | 15 | none | Fig. 2 | 300 | 450 | 15 | 19.2 | 0.41 |
| Example 9 | 1.05 | 3 | 0.032 | 20 | 15 | none | Fig. 2 | 300 | 450 | 30 | 18.6 | 0.41 |
| Example 10 | 1.05 | 3 | 0.032 | 20 | 15 | none | Fig. 2 | 300 | 475 | 30 | 20.6 | 0.41 |
| Example 11 | 1.05 | 3 | 0.032 | 20 | 15 | none | Fig. 2 | 300 | 450 | 15 | 17.1 | 0.44 |
| Example 12 | 1.05 | 3 | 0.032 | 20 | 15 | none | Fig. 2 | 300 | 475 | 30 | 18.9 | 0.40 |

### [Table 2-1]

**Table 2-1**

| | Magnetic Raw Material Powder | | Modifier Powder | | | Magnetic Field Orientation | Heating Pressurizing Patterns | Pressure P (MPa) | Temperature T (°C) | Sintering Time L (min.) | Coercive Force Hcj (kOe) | Residual Magnetization Bj (T) |
|---|---|---|---|---|---|---|---|---|---|---|---|---|
| | Oxygen Content (mass%) | Average Particle Diameter (µm) | Oxygen Content (mass%) | Average Particle Diameter (µm) | Amount of Zn Component (mass%) | | | | | | | |
| Comparative Example 10 | 1.34 | 3 | 0.19 | 5 | 15 | none | Fig. 2 | 300 | 400 | 15 | 8.0 | 0.42 |
| Comparative Example 11 | 1.34 | 3 | 0.19 | 5 | 15 | none | Fig. 2 | 300 | 425 | 15 | 12.1 | 0.41 |
| Example 13 | 1.34 | 3 | 0.19 | 5 | 15 | none | Fig. 2 | 300 | 450 | 10 | 15.9 | 0.42 |
| Example 14 | 1.34 | 3 | 0.19 | 5 | 15 | none | Fig. 2 | 300 | 450 | 15 | 15.0 | 0.42 |
| Example 15 | 1.34 | 3 | 0.19 | 5 | 15 | none | Fig. 2 | 300 | 450 | 30 | 13.4 | 0.43 |
| Example 16 | 1.34 | 3 | 0.19 | 5 | 15 | none | Fig. 2 | 300 | 475 | 30 | 15.7 | 0.40 |
| Example 17 | 1.34 | 3 | 0.19 | 5 | 15 | none | Fig. 2 | 500 | 475 | 30 | 15.0 | 0.44 |

### [Table 2-2]

**Table 2-2**

| | Magnetic Raw Material Powder | | Modifier Powder | | | Magnetic Field Orientation | Heating Pressurizing Patterns | Pressure P (MPa) | Temperature T (°C) | Sintering Time L (min.) | Coercive Force Hcj (kOe) | Residual Magnetization Bj (T) |
|---|---|---|---|---|---|---|---|---|---|---|---|---|
| | Oxygen Content (mass%) | Average Particle Diameter (µm) | Oxygen Content (mass%) | Average Particle Diameter (µm) | Amount of Zn Component (mass%) | | | | | | | |
| Comparative Example 12 | 1.34 | 3 | 0.13 | 10 | 15 | none | Fig. 2 | 300 | 400 | 15 | 7.9 | 0.41 |
| Comparative Example 13 | 1.34 | 3 | 0.13 | 10 | 15 | none | Fig. 2 | 300 | 425 | 15 | 13.8 | 0.42 |
| Example 18 | 1.34 | 3 | 0.13 | 10 | 15 | none | Fig. 2 | 300 | 450 | 10 | 15.7 | 0.42 |
| Example 19 | 1.34 | 3 | 0.13 | 10 | 15 | none | Fig. 2 | 300 | 450 | 15 | 16.3 | 0.41 |
| Example 20 | 1.34 | 3 | 0.13 | 10 | 15 | none | Fig. 2 | 300 | 450 | 30 | 16.6 | 0.42 |
| Example 21 | 1.34 | 3 | 0.13 | 10 | 15 | none | Fig. 2 | 500 | 475 | 30 | 14.8 | 0.45 |

### [Table 2-3]

**Table 2-3**

| | Magnetic Raw Material Powder | | Modifier Powder | | | Magnetic Field Orientation | Heating Pressurizing Patterns | Pressure P (MPa) | Temperature T (°C) | Sintering Time L (min.) | Coercive Force Hcj (kOe) | Residual Magnetization Bj (T) |
|---|---|---|---|---|---|---|---|---|---|---|---|---|
| | Oxygen Content (mass%) | Average Particle Diameter (µm) | Oxygen Content (mass%) | Average Particle Diameter (µm) | Amount of Zn Component (mass%) | | | | | | | |
| Comparative Example 14 | 1.34 | 3 | 0.009 | 65 | 15 | none | Fig. 2 | 300 | 400 | 15 | 5.4 | 0.41 |
| Comparative Example 15 | 1.34 | 3 | 0.009 | 65 | 15 | none | Fig. 2 | 300 | 425 | 15 | 8.4 | 0.38 |
| Example 22 | 1.34 | 3 | 0.009 | 65 | 15 | none | Fig. 2 | 300 | 450 | 15 | 9.9 | 0.41 |
| Example 23 | 1.34 | 3 | 0.009 | 65 | 15 | none | Fig. 2 | 300 | 450 | 30 | 9.3 | 0.41 |
| Example 24 | 1.34 | 3 | 0.009 | 65 | 15 | none | Fig. 2 | 300 | 475 | 30 | 14.0 | 0.32 |
| Example 25 | 1.34 | 3 | 0.009 | 65 | 15 | none | Fig. 2 | 500 | 450 | 15 | 11.6 | 0.41 |
| Example 26 | 1.34 | 3 | 0.009 | 65 | 15 | none | Fig. 2 | 500 | 475 | 30 | 13.7 | 0.37 |

### [Table 2-4]

**Table 2-4**

| | Magnetic Raw Material Powder | | Modifier Powder | | | Magnetic Field Orientation | Heating Pressurizing Patterns | Pressure P (MPa) | Temperature T (°C) | Sintering Time L (min.) | Coercive Force Hcj (kOe) | Residual Magnetization Bj (T) |
|---|---|---|---|---|---|---|---|---|---|---|---|---|
| | Oxygen Content (mass%) | Average Particle Diameter (µm) | Oxygen Content (mass%) | Average Particle Diameter (µm) | Amount of Zn Component (mass%) | | | | | | | |
| Comparative Example 16 | 1.05 | 3 | 0.19 | 5 | 15 | none | Fig. 2 | 300 | 400 | 15 | 6.0 | 0.40 |
| Comparative Example 17 | 1.05 | 3 | 0.19 | 5 | 15 | none | Fig. 2 | 300 | 425 | 15 | 13.1 | 0.40 |
| Example 27 | 1.05 | 3 | 0.19 | 5 | 15 | none | Fig. 2 | 300 | 450 | 10 | 18.1 | 0.40 |
| Example 28 | 1.05 | 3 | 0.19 | 5 | 15 | none | Fig. 2 | 300 | 450 | 15 | 17.5 | 0.41 |
| Example 29 | 1.05 | 3 | 0.19 | 5 | 15 | none | Fig. 2 | 300 | 450 | 30 | 17.3 | 0.40 |
| Example 30 | 1.05 | 3 | 0.19 | 5 | 15 | none | Fig. 2 | 300 | 475 | 30 | 20.7 | 0.40 |
| Example 31 | 1.05 | 3 | 0.19 | 5 | 15 | none | Fig. 2 | 500 | 475 | 30 | 17.5 | 0.43 |

### [Table 2-5]

**Table 2-5**

| | Magnetic Raw Material Powder | | Modifier Powder | | | Magnetic Field Orientation | Heating Pressurizing Patterns | Pressure P (MPa) | Temperature T (°C) | Sintering Time L (min.) | Coercive Force Hcj (kOe) | Residual Magnetization Bj (T) |
|---|---|---|---|---|---|---|---|---|---|---|---|---|
| | Oxygen Content (mass%) | Average Particle Diameter (µm) | Oxygen Content (mass%) | Average Particle Diameter (µm) | Amount of Zn Component (mass%) | | | | | | | |
| Comparative Example 18 | 1.05 | 3 | 0.13 | 10 | 15 | none | Fig. 2 | 300 | 400 | 15 | 6.5 | 0.40 |
| Comparative Example 19 | 1.05 | 3 | 0.13 | 10 | 15 | none | Fig. 2 | 300 | 425 | 15 | 15.1 | 0.41 |
| Example 32 | 1.05 | 3 | 0.13 | 10 | 15 | none | Fig. 2 | 300 | 450 | 10 | 17.9 | 0.41 |
| Example 33 | 1.05 | 3 | 0.13 | 10 | 15 | none | Fig. 2 | 300 | 450 | 15 | 19.1 | 0.41 |
| Example 34 | 1.05 | 3 | 0.13 | 10 | 15 | none | Fig. 2 | 300 | 450 | 30 | 18.4 | 0.41 |
| Example 35 | 1.05 | 3 | 0.13 | 10 | 15 | none | Fig. 2 | 300 | 475 | 30 | 22.9 | 0.40 |
| Example 36 | 1.05 | 3 | 0.13 | 10 | 15 | none | Fig. 2 | 500 | 475 | 30 | 20.5 | 0.43 |

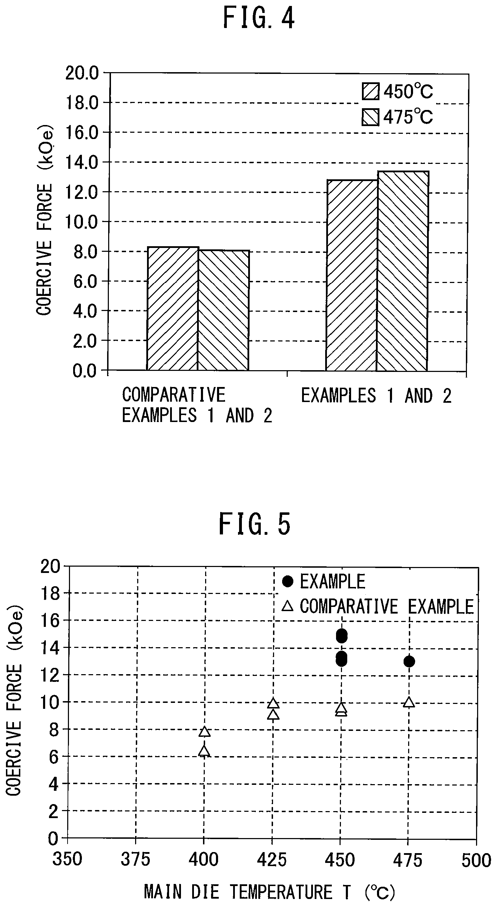

With respect to the samples of Examples 1 and 2 and Comparative Examples 1 and 2 of Table 1, the measurement results of the coercive force are collectively illustrated in Fig. 4. It could be confirmed from Fig. 4 that in the samples of Examples 1 and 2, even when a filled product having an oriented magnetic field was used, since at least a part of the modifier powder in the filled product was melted in a non-pressure state to obtain an intermediate molded product and the intermediate molded product was then subjected to liquid phase sintering, the coercive force was enhanced.

With respect to the samples of Examples 3 to 7 and Comparative Examples 3 to 9 of Table 1, the measurement results of the coercive force are collectively illustrated in Fig. 5. It could be confirmed from Fig. 5 that as long as the temperature of the main die 12 is 450°C or more, at least a part of the modifier powder in the filled product melts in a non-pressure state to obtain an intermediate molded product, and therefore when the intermediate molded product is subjected to liquid phase sintering, the coercive force is enhanced.

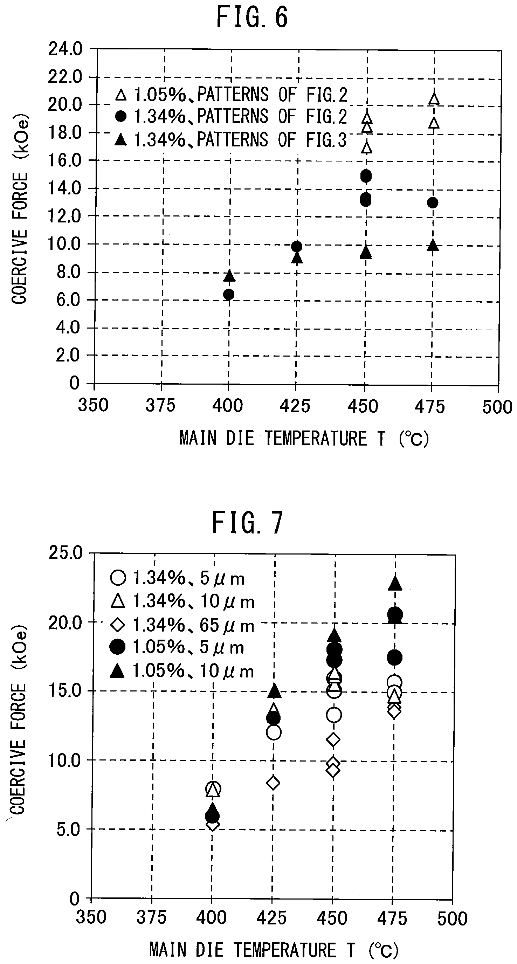

With respect to the samples of Examples 3 to 12 and Comparative Examples 3 and 4 of Table 1, the measurement results of the coercive force are collectively illustrated in Fig. 6, which are stratified by the oxygen content of the magnetic raw material powder and the heating and pressurizing patterns.

In Fig. 6, "1.05%, patterns of Fig. 2" indicates that "the oxygen content of the magnetic raw material powder is 1.05 mass%, and heating and pressurization were performed according to the patterns illustrated in Fig. 2"; "1.34%, patterns of Fig. 2" indicates that "the oxygen content of the magnetic raw material powder is 1.34 mass%, and heating and pressurization were performed according to the patterns illustrated in Fig. 2"; and "1.34%, patterns of Fig. 3" indicates that "the oxygen content of the magnetic raw material powder is 1.34 mass%, and heating and pressurization were performed according to the patterns illustrated in Fig. 3".

It could be confirmed from Fig. 6 that when the temperature of the main die 12 is 450°C or more and the heating and pressurization are performed according to the patterns illustrated in Fig. 2, at least a part of the modifier powder in the filled product melts, obtaining a melt, and when liquid phase sintering is performed after obtaining the melt, the coercive force is enhanced. It could be also confirmed that as the oxygen content of the magnetic raw material powder is smaller, the coercive force is more enhanced.

In addition, with respect to the samples of Examples 13 to 35 and Comparative Examples 10 to 19 of Table 2, the measurement results of the coercive force are collectively illustrated in Fig. 7, which are stratified by the oxygen content of the magnetic raw material powder and the average particle diameter of the modifier powder.

In Fig. 7, "1.34%, 5 µm" indicates that "the oxygen content of the magnetic raw material powder is 1.34 mass%, and the average particle diameter of the modifier powder is 5 µm"; "1.34%, 10 µm" indicates that "the oxygen content of the magnetic raw material powder is 1.34 mass%, and the average particle diameter of the modifier powder is 10 µm"; "1.34%, 65 µm" indicates that "the oxygen content of the magnetic raw material powder is 1.34 mass%, and the average particle diameter of the modifier powder is 65 µm"; "1.05%, 5 µm" indicates that "the oxygen content of the magnetic raw material powder is 1.05 mass%, and the average particle diameter of the modifier powder is 5 µm"; and "1.05%, 10 µm" indicates that "the oxygen content of the magnetic raw material powder is 1.05 mass%, and the average particle diameter of the modifier powder is 10 µm".

It could be confirmed from Fig. 7 that when the average particle diameter of the modifier powder is 65 µm, the coercive force-enhancing effect decreases. This is considered because when the particle diameter of the modifier powder is large, it is difficult to embrace the magnetic raw material powder and consequently, the lubricant and/or buffer effect is reduced, as a result, oxygen in the magnetic raw material powder can hardly be absorbed by metallic Zn of the modifier powder.

These results could verify the effects of the production method of a rare earth magnet of the present disclosure and the production apparatus used therefor.

### [REFERENCE SIGNS LIST]

- 10: Molding die
- 12: Main die
- 14a, 14b: Punch die
- 16: Through hole
- 18: Temperature sensor
- 20: Heater
- 30: Pressure member
- 40: Electromagnetic coil
- 100: Production apparatus

## Claims

1. A method for producing a rare earth magnet, comprising:
mixing a magnetic raw material powder containing Sm, Fe and N with a modifier powder containing metallic Zn to obtain a mixed powder,
filling the mixed powder into a molding die to obtain a filled product,
melting at least a part of the modifier powder in the filled product while applying a pressure of less than 20 MPa to the filled product or without applying a pressure to obtain an intermediate molded product, and
subjecting the intermediate molded product to liquid phase sintering at a pressure of 20 MPa or more to obtain a sintered body.

2. The method according to claim 1, wherein the magnetic raw material powder contains a magnetic phase represented by (Sm₍₁₋ᵢ₎Rᵢ)₂(Fe₍₁₋ⱼ₎Coⱼ)₁₇Nₕ (wherein R is one or more members selected from Y, Zr and rare earth elements other than Sm, i is from 0 to 0.50, j is from 0 to 0.52, and h is from 1.5 to 4.5).

3. The method according to claim 1 or 2, wherein the oxygen content of the magnetic raw material powder is 1.05 mass% or less.

4. The method according to any one of claims 1 to 3, wherein the average equivalent-circle diameter of projected areas of the modifier powder is 20 µm or less.

5. The method according to any one of claims 1 to 4, wherein the mixed powder is filled into the molding die and compacted in a magnetic field to obtain a filled product having an oriented magnetic field.

## Patentansprüche

1. Verfahren zum Herstellen eines Seltenerdmagneten, umfassend:
Mischen eines magnetischen Rohstoffpulvers, das Sm, Fe und N enthält, mit einem Modifizierpulver, das metallisches Zn enthält, um ein gemischtes Pulver zu erhalten,
Füllen des gemischten Pulvers in eine Gießform, um ein gefülltes Produkt zu erhalten,
Schmelzen von mindestens einem Teil des Modifizierpulvers in das gefüllte Produkt, während ein Druck von weniger als 20 MPa auf das gefüllte Produkt ausgeübt wird, oder ohne einen Druck auszuüben, um ein Zwischenformprodukt zu erhalten, und
Unterziehen des Zwischenformprodukts einem Flüssigphasensintern bei einem Druck von 20 MPa oder mehr, um einen Sinterkörper zu erhalten.

2. Verfahren nach Anspruch 1, wobei das magnetische Rohstoffpulver eine magnetische Phase enthält, die durch (Sm₍₁₋ᵢ₎Rᵢ)₂(Fe₍₁₋ⱼ₎Coⱼ)₁₇Nₕ dargestellt wird (wobei R eines oder mehrere Bestandteile, ausgewählt aus Y, Zr und anderen Seltenerdelementen als Sm, ist, i 0 bis 0,50 beträgt, j 0 bis 0,52 beträgt und h 1,5 bis 4,5 beträgt).

3. Verfahren nach Anspruch 1 oder 2, wobei der Sauerstoffgehalt des magnetischen Rohstoffpulvers 1,05 Massen-% beträgt.

4. Verfahren nach einem der Ansprüche 1 bis 3, wobei der durchschnittliche äquivalente Kreisdurchmesser projizierter Bereiche des Modifizierpulvers 20 µm oder weniger beträgt.

5. Verfahren nach einem der Ansprüche 1 bis 4, wobei das gemischte Pulver in die Gießform gefüllt und in einem magnetischen Feld verdichtet wird, um ein gefülltes Produkt zu erhalten, das ein gerichtetes Magnetfeld aufweist.

## Revendications

1. Procédé de production d'un aimant aux terres rares, comprenant :
le mélange d'une poudre de matière première magnétique contenant Sm, Fe et N avec une poudre de modification contenant du Zn métallique pour obtenir une poudre mixte,
le chargement de la poudre mixte dans une filière de moulage pour obtenir un produit chargé,
la fusion d'au moins une partie de la poudre de modification dans le produit chargé tout en appliquant une pression inférieure à 20 MPa au produit chargé ou sans application de pression pour obtenir un produit moulé intermédiaire, et
la soumission du produit moulé intermédiaire à un frittage en phase liquide à une pression de 20 MPa ou plus pour obtenir un corps fritté.

2. Procédé selon la revendication 1, dans lequel la poudre de matière première magnétique contient une phase magnétique représentée par (Sm₍₁₋ᵢ₎Rᵢ)₂(Fe₍₁₋ⱼ₎Coⱼ)₁₇Nₕ (où R est au moins un élément choisi parmi Y, Zr et des éléments des terres rares autres que Sm, i vaut 0 à 0,50, j vaut 0 à 0,52, et h vaut 1,5 à 4,5).

3. Procédé selon la revendication 1 ou 2, dans lequel la teneur en oxygène de la poudre de matière première magnétique est de 1,05 % en masse ou moins.

4. Procédé selon l'une quelconque des revendications 1 à 3, dans lequel le diamètre de cercle équivalent moyen de surfaces projetées de la poudre de modification est de 20 µm ou moins.

5. Procédé selon l'une quelconque des revendications 1 à 4, dans lequel la poudre mixte est chargée dans la filière de moulage et compactée dans un champ magnétique pour l'obtention d'un produit chargé ayant un champ magnétique orienté.
